# EUROPEAN PATENT APPLICATION

(11) **EP 1 030 256 A2**
(43) Date of publication of application: **23.08.2000**
(21) Application number: 00300085.8
(22) Date of filing: 07.01.2000
(51) Int. Cl.: G06F 17/60

(54) **Charge calculations**

(30) Priority: 19.02.1999 GB 9903735
(71) Applicant: International Computers Ltd., London, EC2A 1SL (GB)
(72) Inventor: Stuart, Muckley, Reading, Berkshire RG2 8SX (GB)
(74) Representative: Guyatt, Derek Charles

(57) **Abstract**

Charge calculations which involve a plurality of elements (events), such as Council tax, where the charge due depends on the housing band, single occupancy, disability, etc., are made using object - oriented techniques. Objects (4, 5, 6) corresponding to each event for a particular account, and for a period of time over which the events are unchanged, are created by the application of respective rule objects (3) to data relating to the events. The objects created are such as to be able to calculate the corresponding charge element themselves, upon request. Values obtained from the charge calculations stage (7) are posted to the particular account on an accounts database (8). In particular, the objects calculate aggregated values, for each period of time, as measured from a common point in time, and the values posted to the accounts database comprise the difference between aggregated values corresponding to two successive periods of time.

## Description

This invention relates to charge calculation and in particular to a charge calculation system.

There are many areas where it is necessary to make charges (create debits), to raise revenues, and complex calculations are often involved since frequently different charges are applicable. A particular example of this is in local government taxation, for example council tax. In that case the actual payment due for a particular property will depend on a number of factors, for example, the band the property falls within, the number of persons in the household, particularly single occupancy, whether a person in the household is disabled etc. The charges due may differ from one financial year to another but the actual occupants and/or the occupants' circumstances can change within a financial year. Calculation of taxes due can thus be extremely complicated but must be performed accurately and consistently if the occupants are to be correctly billed and the local government is to raise the appropriate amount of revenue.

Whilst computer-based solutions are available for such charge calculations, they are not necessarily applicable to the future IT System requirements of local government or other public sector concerns, where there are increasing requirements for consumer-focused approaches, for improved efficiency, for the combating of fraud etc. Object- oriented architectures are particularly applicable for such applications and IT systems for local government etc are currently being developed which use them. Object-oriented architectures are well known. They involve the use of objects to represent real world entities of interest. An object is a self-contained software package. Objects include data and functions (or methods) that operate on that data.

According to one aspect of the present invention there is provided a charge calculation system comprising a first database for storing details relating to a plurality of accounts;
a second database for storing data relating to events for which charges are to be posted to respective ones of the accounts, a plurality of different event types being associatable with each account;
means for extracting data from the second database relating to a said account and applicable to a period of time in which the events relating to said account do not change, and
means for creating a respective object for each of the events relating to said account, each said object serving, within a calculation stage, to make a respective charge calculation for said period of time, and the calculation stage serving to post values obtained from the charge calculations to said account in the first database.

According to another aspect of the present invention there is provided a method of calculating charges comprising the steps of:
storing in a base database data relating to events for which charges are to be posted to respective ones of a plurality of accounts, a plurality of different event types being associatable with each account;
extracting data from the base database relating to a said account and applicable to a period of time in which the events relating to said account do not change;
creating a respective object for each of the events relating to said account by the application of a respective rule object thereto, each said object being able to calculate the charge element pertaining thereto;
requesting each said object to calculate its respective charge element for said period of time, and
posting values obtained from the charge calculations to an accounts database where details of the plurality of accounts are stored and in particular to the said account.

According to another aspect of the present invention there is provided a computer-readable storage medium having a program recorded thereon, the program serving to calculate charges by performing the steps of:
storing in a base database data relating to events for which charges are to be posted to respective ones of a plurality of accounts, a plurality of different event types being associatable with each account;
extracting data from the base database relating to a said account and applicable to a period of time in which the events relating to said account do not change;
creating a respective object for each of the events relating to said account by the application of a respective rule object thereto, each said object being able to calculate the charge element pertaining thereto;
requesting each said object to calculate its respective charge element for said period of time, and
posting values obtained from the charge calculations to an accounts database where details of the plurality of accounts are stored and in particular to the said account.

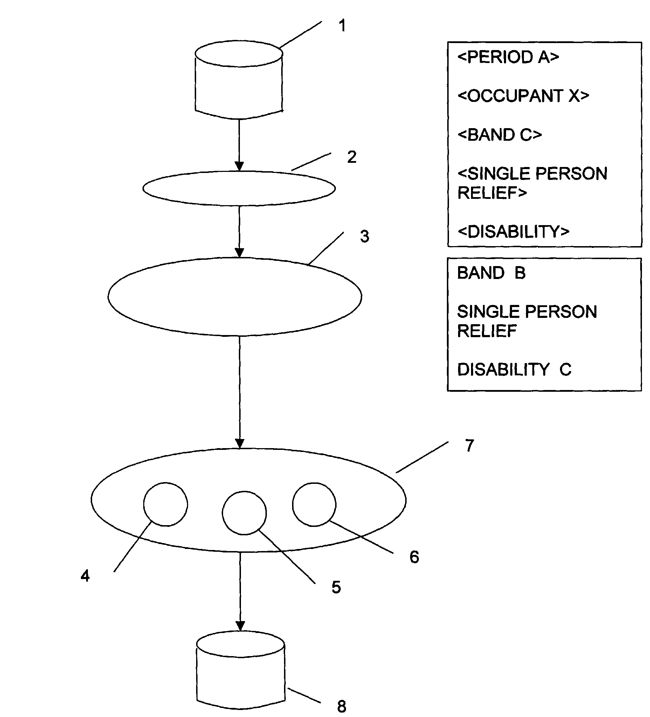

Embodiments of the invention will now be described with reference to the accompanying drawing which shows schematically a charge calculation engine (computer system) and/or the steps it performs.

The charge calculation system of the present invention is actually an engine or means for posting debits. What is meant by that can be appreciated from the following simple example. With regard to Council tax, the property a person is living in may be in a band A and if the person lives there alone they are entitled to single person relief i.e. a discount. The local government holds an account for council tax payments due from the person. The amount the person owes is basically calculated as follows. First a debit for the total sum due for the property is posted to their account, this being the amount for a band A property. Subsequently, a debit is posted to the account for the single person relief. Thus is in effect additional money put into the account to reduce the amount due from that particular person. This step is still referred to as posting a debit, although it is really posting a credit. A bill subsequently supplied to the person will quote the total sum and the relief to which they are entitled, as well as the amount actually due, which is the difference in this case.

Whilst a charge calculation engine can be devised for a particular application, say calculating Council tax, a generic charge calculation engine which could handle any taxation calculations would be advantageous. Different types of taxation, such as Council tax, business rates, housing benefit, social fund etc, require use of a base engine over which different rules can be applied. Questions have to be asked of the person, property concerned such as "Do you live by yourself?" for Council tax, and the results stored as data, together with other information, such as the band a property falls in. This data then needs to be extracted and processed to produce the appropriate debits for posting to a particular account.

Referring now to the drawing, the base data for the particular type of charge calculations concerned, e.g. Council tax, is stored in a database 1 (Storage / retrieval system). Other data may also be stored in the database, in which case only that appropriate to the particular type of charge calculation will be extracted. Consider the case illustrated for a taxation period A, where there is an occupant X of a property in band C, the occupant being entitled to single person relief and also being disabled. These parameters are shown in the box next to database 1. The information is all stored as data in database 1, and must be extracted by means 2 therefrom. After extraction, means 3 serves to apply a series of rules to the data. The separate data items (parameters) have their respective rules (rules objects) applied separately. There is a respective single rule for each type of parameter. Those applicable to this case being shown in the box next to means 3.

Hence for period A, the result of applying the band rule object is to create a band object 4; the result of applying a single person relief rule is to create a single person relief object 5, and the result of applying a disability rule is to create a disability object 6. These objects are indicated within a calculation stage 7, although it is the objects themselves that actually calculate their own amounts by virtue of the nature of objects.

In Council tax, the effect of disability is actually to reduce the band, so a band C property is in effect reduced to a band B property (band A being the lowest) for a disabled occupant living in a band C property (DISABILITY C) i.e. the band object is a band B object not a band C object, at least for the period A. Each of the finite parts of the overall charge are then calculated, in other words the objects 4, 5 and 6 each calculate their own respective amounts due for the period A and post them to a respective account on an accounts database 8, for use in generating the appropriate bill relating to that account.

The way the debits are calculated is actually as the differences between two sets of amounts; an old set comprising the aggregated totals up to a particular date and a new set comprising the aggregated totals up to the end of a certain period after the particular date; the difference being what is actually "due" for that period. The need for posting the debits as a difference between a current set and a previous set arises because of interactions between parameters. It has been found that unless, for example, an exemption is exactly the same as a standard amount of charge, then when rounding out the figures, the results can be pennies out. There are two different steps in the calculation process and they can have the effect of changing one another. The first step is where the actual rules and the events (parameters) interact and the second is the encapsulation where the objects calculate their own amounts.

If, in the example mentioned above where disability relief was applied in period A, it was later found that there was no entitlement to disability relief, then for the next period (period B) the rules will be applied so that the calculation changes and disability relief is no longer applied, rather it is taken off, and what is actually posted will be the difference between the two aggregated values pertaining at the ends of the periods A and B so, in effect what is posted by the disability object is "minus" the amount applicable for disability relief.

In simple terms, data is extracted from a database, mapped into data from which calculations can then be made, and the latter is used to perform the calculations, with debits subsequently being posted to a respective account. The periods for which the calculations are made could be as short as a day, but would normally be longer, and could comprise a whole year. Overall the periods would add up to a year for normal billing purposes. The applied rules will take into account the lengths of the periods, thus facilitating calculation.

Since the calculation engine wraps calculations for a single type of event within a respective object, the constituent parts of the calculation can be changed quickly, for example if taxation rules change. The "plugging-in" of actual calculation rule objects is also facilitated. In addition, because calculation objects can be added, the base engine is generic in nature and not tied to any specific type of calculation, for example Council tax as described here.

As can be appreciated from the above, charge calculation follows a simple routine, which basically comprises the following steps:
(a) Split the events (parameters) which are used to calculate charge into finite periods within which no events change;
(b) read in all of the events for a said period;
(c) create an object for each of the events within said period by use of rules objects, and
(d) ask each object in turn to calculate the respective tax/charge amount for said period and post it to an accounts database.

This is the basic procedure which would be used for the very first period ever applied to particular property. In practice, however, charging Council Tax is an on-going procedure and charges that were made in the past affect charges to be made subsequently. Hence in practice the objects actually calculate and store the values relating to any one period as an aggregated total from a common point in time in the past. The charge due for a particular period is then the difference between the aggregated values applicable to the beginning and the end of that period, i.e. the difference between aggregated values corresponding to two successive periods of time, and it is this difference value that is posted to the accounts database. The latter is then used to produce the appropriate bill for an occupant and this may involve adding the values corresponding to a number of periods in order to produce a bill for a year, or part of a year.

The invention may be implemented on any known computer system capable of supporting object-oriented processing. For example, the system may comprise an ICL Xtra Server, running Microsoft Transaction Server (MTS) software.

## Claims

1. A charge calculation system comprising:
a first database (8) for storing details relating to a plurality of accounts;
a second database (1) for storing data relating to events for which charges are to be posted to respective ones of the accounts, a plurality of different event types being associatable with each account;
means (2) for extracting data from the second database (1) relating to a said account and applicable to a period of time in which the events relating to said account do not change; and
means (3) for creating a respective object (4, 5, 6) for each of the events relating to said account, each said object serving, within a calculation stage (7), to make a respective charge calculation for said period of time, and the calculation stage (7) serving to post values obtained from the charge calculations to said account in the first database (8).

2. A charge calculation system as claimed in claim 1, wherein the object creating means (3) comprise a plurality of rules objects, a respective one of which is combined with each item of the extracted event data to create the respective object.

3. A change calculation system as claimed in claim 1 or claim 2, wherein the charge calculations serve to produce aggregated values, for each said period of time, as measured from a common point in time, and wherein the charge calculations stage (7) serves to post values comprising the difference between aggregated values corresponding to two successive periods of time to the said account in the first database (8).

4. A method of calculating charges comprising the steps of:
storing in a base database (1) data relating to events for which charges are to be posted to respective ones of a plurality of accounts, a plurality of different event types being associatable with each account;
extracting (2) data from the base database (1) relating to a said account and applicable to a period of time in which the events relating to said account do not change;
creating (3) a respective object (4, 5, 6) for each of the events relating to said account by the application of a respective rule object thereto, each said object (4, 5, 6) being able to calculate the charge element pertaining thereto;
requesting each said object to calculate (7) its respective charge element for said period of time, and
posting values obtained from the charge calculations (7) to an accounts database (8) where details of the plurality of accounts are stored and in particular to the said account.

5. A method as claimed in claim 4 wherein the charge calculations (7) serve to produce aggregated values, for each said period of time, as measured from a common point in time, and wherein the values posted to the accounts database (8) comprise the difference between aggregated values corresponding to two successive periods of time.

6. A computer-readable storage medium having a program recorded thereon, the program serving to calculate charges by performing the steps of:
storing in a base database (1) data relating to events for which charges are to be posted to respective ones of a plurality of accounts, a plurality of different event types being associatable with each account;
extracting (2) data from the base database (1) relating to a said account and applicable to a period of time in which the events relating to said account do not change;
creating (3) a respective object (4, 5, 6) for each of the events relating to said account by the application of a respective rule object thereto, each said object (4, 5, 6) being able to calculate the charge element pertaining thereto;
requesting each said object to calculate (7) its respective charge element for said period of time, and
posting values obtained from the charge calculations (7) to an accounts database (8) where details of the plurality of accounts are stored and in particular to the said account.

7. A computer-readable storage medium as claimed in claim 6, wherein the charge calculations (7) serve to produce aggregated values, for each said period of time, as measured from a common point in time, and wherein the values posted to the accounts database (8) comprise the difference between aggregated values corresponding to two successive periods of time.
